# EUROPEAN PATENT APPLICATION

(11) **EP 4 542 736 A1**
(43) Date of publication of application: **23.04.2025**
(21) Application number: 23838968.8
(22) Date of filing: 12.07.2023
(51) Int. Cl.: H01M 50/148

(54) **COVER PLATE, TOP COVER, BATTERY CELL AND BATTERY MODULE**

(30) Priority: 14.07.2022 CN 202221833276 U
(71) Applicant: Hithium Tech HK Limited, Hong Kong (HK)
(72) Inventor: LIANG, Jinyun, Xiamen, Fujian 361100 (CN)
(74) Representative: DREISS Patentanwälte PartG mbB
(86) International application number: PCT/CN2023/106916
(87) International publication number: WO 2024/012478

(57) **Abstract**

Provided are a cover plate (100), a top cover, a battery cell, and a battery module. The cover plate (100) is used for the battery cell. The cover plate (100) includes: a plate body (12) having a through-hole (16) ; and a raised edge (14) disposed on a surface of the plate body (12) and surrounding the through-hole (16). The raised edge (14) has at least one notch (18). An internal space defined by the raised edge (14) is in communication with an external space outside the raised edge (14) through the at least one notch (18).

## Description

### CROSS-REFERENCE TO RELATED APPLICATION

This application claims priority to and the benefit of patent application No. 2022218332764 filed with China National Intellectual Property Administration on July 14, 2022, the entire contents of which are incorporated herein by reference.

### FIELD

The present disclosure relates to the field of battery technologies, and more particularly, to a cover plate, a top cover, a battery cell, and a battery module.

### BACKGROUND

Typically, a battery cell usually includes a top cover, which can consist of a cover plate, a pole, an upper plastic part, and other components. To realize anti-twisting function of the pole of the battery cell, the pole is added with knurls or the cover plate is added with notches, and the protrusion clamps the upper plastic part, thereby achieving the anti-twisting function of the pole. Currently, the anti-twisting aspect of the top cover is singular and cannot increase anti-twisting from multiple aspects of the pole. Moreover, some anti-twisting structures tend to create a gap between the cover plate and the upper plastic part during injection molding, which significantly reduces an anti-twisting capability.

### SUMMARY

An embodiment of the present disclosure provides a cover plate, a top cover, a battery cell, and a battery module.

A cover plate according to the embodiment of the present disclosure is used for a battery cell. The cover plate includes: a plate body having a through-hole; and a raised edge disposed on a surface of the plate body and surrounding the through-hole, the raised edge having at least one notch, and an internal space defined by the raised edge being in communication with an external space outside the raised edge through the at least one notch.

Since the at least one notch is formed at the raised edge of the cover plate, on the one hand, during an injection molding process of an upper plastic part, the upper plastic part can be clamped to realize anti-twisting.

On the other hand, in the process of injection molding of the upper plastic part into the cover plate, a gap that has not been filled by the upper plastic part can be in communication with an ambient environment. In this way, gas formed during the injection molding of the upper plastic part can be discharged from the at least one notch. That is, the arrangement of the at least one notch is also conducive to discharging of the gas during the injection molding of the upper plastic part, preventing formation of bubbles during the injection molding of the upper plastic part to affect physical properties of the upper plastic part, and can also prevent the formation of a gap between the upper plastic part and the cover plate during demolding of the upper plastic part, affecting an anti-twisting ability.

In some embodiments, the at least one notch has a depth equal to a height of the raised edge.

In this way, the gas formed during the injection molding can be discharged more smoothly.

In some embodiments, the raised edge surrounds the through-hole to be formed into a frame in a form of a rounded square, and the at least one notch is defined through at least one corner of the rounded square.

In this way, anti-twisting performance can be improved.

In some embodiments, the raised edge includes two first side frames opposite to each other and two second side frames opposite to each other. At least one of the two first side frames has a first protrusion at a surface of the at least one of the two first side frames, and/or at least one of the two second side frames has a second projection provided at a surface of the at least one of the two second side frames.

In this way, the anti-twisting performance of the upper plastic part and the cover plate can be realized.

In some embodiments, the raised edge includes two first side frames opposite to each other and two second side frames opposite to each other. At least one of the two first side frames has a first recess formed at a top surface of the at least one of the two first side frame, and/or at least one of the two second side frames has a second recess formed at a top surface of the at least one of the two second side frames.

In this way, the anti-twisting performance of the upper plastic part and the cover plate can be realized.

In some embodiments, a depth of the first recess is smaller than or equal to a depth of each of the at least one notch, and/or a depth of the second recess is smaller than or equal to a depth of each of the at least one notch.

In this way, predetermined structural strength of the cover plate can be guaranteed and an exhaust speed can be increased.

In some embodiments, the raised edge has a frame-shaped structure, the frame-shaped structure including four side frames, at least one of the four side frames having a protrusion and two recesses, and the protrusion being disposed between the two recesses.

In this way, the anti-twisting performance can be improved.

In some embodiments, the plate body has a first surface and a second surface, the raised edge being disposed on the first surface, and the second surface further having a recessed portion surrounding the through-hole and in communication with the through-hole.

In this way, anti-twisting performances of a lower plastic part and the cover plate can be improved.

In some embodiments, the cover plate includes a concave-convex structure disposed on a surface of the raised edge away from the plate body.

In this way, with the convex-concave structure, the anti-twisting performance of the upper plastic part and the anti-twisting performance of the cover plate can be enhanced.

A top cover is provided according to the embodiment of the present disclosure. The top cover includes: the cover plate according to any of the above embodiments.

In some embodiments, the top cover further includes: a pole; and an insulating member mounted in the through-hole, the insulating member being fixedly connected to a surface of the pole, and a part of the insulating member being filled in the at least one notch.

A battery cell is provided according to the embodiment of the present disclosure. The battery cell includes: the top cover according to the above embodiments.

A battery module is provided according to the embodiment of the present disclosure. The battery module includes the battery cell according to the above embodiments.

In the top cover, the battery cell, and the battery module, the notch is formed in the raised edge, in such a manner that on the one hand, during an injection molding process of an upper plastic part, the upper plastic part can be clamped to realize the anti-twisting.

On the other hand, in the process of injection molding of the upper plastic part into the cover plate, a gap that has not been filled by the upper plastic part can be in communication with an ambient environment. In this way, the gas formed during the injection molding of the upper plastic part can be discharged from the notch. That is, the arrangement of the notch is also conducive to discharging of the gas during the injection molding of the upper plastic part, preventing formation of bubbles during the injection molding of the upper plastic part to affect physical properties of the upper plastic part, and can also prevent the formation of the gap between the upper plastic part and the cover plate during demolding of the upper plastic part, affecting an anti-twisting ability.

Additional aspects and advantages of the present disclosure will be provided at least in part in the following description, or will become apparent at least in part from the following description, or can be learned from practicing of the present disclosure.

### BRIEF DESCRIPTION OF THE DRAWINGS

The above and/or additional aspects and advantages of the present disclosure will become more apparent and more understandable from the following description of embodiments taken in conjunction with the accompanying drawings.
FIG. 1 is a perspective view of a cover plate according to an embodiment of the present disclosure.
FIG. 2 is a schematic enlarged view of part A in FIG. 1.
FIG. 3 is a top view of a cover plate according to an embodiment of the present disclosure.
FIG. 4 is an enlarged view of part B in FIG. 3.
FIG. 5 is a partial cross-sectional view of a cover plate taken along line C-C in FIG. 3.
FIG. 6 is another perspective view of a cover plate according to an embodiment of the present disclosure.

Description of reference numerals of the accompanying drawings: cover plate-100; plate body-12; raised edge-14; through-hole-16; notch-18; upper surface-20; lower surface-22; first side frame-24; second side frame-26; first protrusion-28; second protrusion-30; second recess-32; recessed portion-34.

### DETAILED DESCRIPTION

Embodiments of the present disclosure will be described in detail below with reference to examples thereof as illustrated in the accompanying drawings, throughout which same or similar elements, or elements having same or similar functions, are denoted by same or similar reference numerals. The embodiments described below with reference to the drawings are illustrative, and are only intended to explain, rather than limiting, the embodiments of the present disclosure.

In the description of the present disclosure, the first feature "on" or "under" the second feature may mean that the first feature is in direct contact with the second feature, or the first and second features are in indirect contact through another feature between them. In addition, the first feature "above" the second feature means that the first feature is directly above or obliquely above the second feature, or simply means that the level of the first feature is higher than that of the second feature. The first feature "below" the second feature may mean that the first feature is directly below or obliquely below the second feature, or simply mean that the level of the first feature is smaller than that of the second feature.

Various embodiments or examples for implementing different structures of the embodiments of the present disclosure are provided below. In order to simplify the description of the embodiments of the present disclosure, components and arrangements of specific examples are described herein. Of course, these specific examples are merely for the purpose of illustration, rather than limiting the present disclosure. Further, the same reference numerals and/or reference letters may appear in different examples of the embodiments of the present disclosure for the purpose of simplicity and clarity, instead of indicating a relationship between different embodiments and/or the discussed arrangements. In addition, the embodiments of the present disclosure provide examples of various specific processes and materials. However, applications of other processes and/or the use of other materials are conceivable for those of ordinary skill in the art.

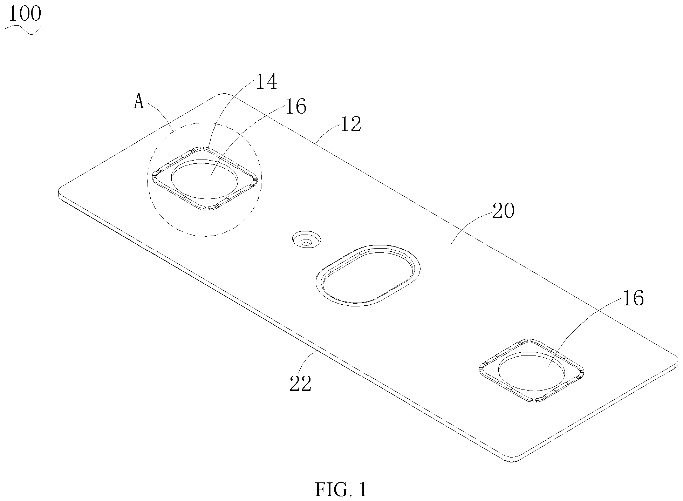

As illustrated in FIG. 1 to FIG. 2, a cover plate 100 according to the embodiments of the present disclosure is provided and used for a battery cell. The cover plate 100 includes a plate body 12 and a raised edge 14. The plate body 12 has a through-hole 16. The raised edge 14 is disposed on a surface of the plate body 12 and surrounds the through-hole 16. The raised edge 14 has at least one notch 18, and an internal space defined by the raised edge 14 is in communication with an external space outside the raised edge 14 through the notch 18.

Since the notch 18 is formed at the raised edge 14 of the cover plate 100, on the one hand, during an injection molding process of an upper plastic part, the upper plastic part can be clamped to realize anti-twisting.

On the other hand, in a process of injection molding of the upper plastic part into the cover plate 100, the notch 18 that has not been filled by the upper plastic part can be in communication with an ambient environment. In this way, gas formed during the injection molding of the upper plastic part can be discharged from the notch 18. That is, the arrangement of the notch 18 is also conducive to discharging of the gas during the injection molding of the upper plastic part, preventing formation of bubbles during the injection molding of the upper plastic part to affect physical properties of the upper plastic part, and can also prevent the formation of the gap between the upper plastic part and the cover plate 100 during demolding of the upper plastic part, affecting an anti-twisting ability.

In an exemplary embodiment of the present disclosure, the cover plate 100 may be used for a square cell, a circular cell, or a battery cell of other shapes. In the embodiment illustrated in FIG. 1, the cover plate 100 has a substantially flat rectangular shape for the square cell. It should be understood that when the cover plate 100 is used for the circular cell, the cover plate 100 may have a disk shape.

The plate body 12 has two through-holes 16. Each through-hole 16 can be passed through by one pole of the battery cell. The through-hole 16 has a circular shape. It should be understood that in other embodiments, a quantity of through-holes 16 in the plate body 12 may be other numbers, and the through-holes 16 may have other regular or irregular shapes. The present disclosure is not limited in this regard.

The plate body 12 includes an upper surface 20 and a lower surface 22. The raised edge 14 is disposed on the upper surface 20. The through-hole 16 passes through the upper surface 20 and the lower surface 22. The plate body 12 may be made of a metallic material, such as aluminum or other metallic materials. The present disclosure is not limited in this regard. The plate body 12 and the raised edge 14 may be integrally formed, or the plate body 12 and the raised edge 14 may be separately formed. For example, the plate body 12 and the raised edge 14 may be manufactured separately, and then the raised edge 14 is fixed to the upper surface 20 of the plate body 12 and surrounds the through-hole 16.

During the injection molding of the upper plastic part, the arrangement of the notch 18 can increase an adhesion area between the upper plastic part and the cover plate 100. In addition, since the internal space defined by the raised edge 14 is in communication with and the external space outside the raised edge 14 through the notch 18, during the injection molding of the upper plastic part, the gas can be likely to be discharged from the internal space to the external space through the notch 18, preventing the physical properties of the upper plastic part from being affected by bubbles in the upper plastic part. In addition, an increase of the adhesion area between the upper plastic part and the cover plate 100 can also prevent the formation of the gap between the upper plastic part and the cover plate 100 during demolding of the upper plastic part to affect the anti-twisting ability. Also, an excellent production rate of the top cover is improved, and a cost of the top cover is reduced. A combination of the upper plastic part located in the notch 18 and the raised edge 14 of the cover plate 100 further enhances original anti-twisting.

In some embodiments, the notch 18 has a depth equal to a height of the raised edge 14. In this way, the gas formed during the injection molding can be discharged more smoothly.

In an exemplary embodiment of the present disclosure, the depth of the notch 18 is equal to the height of the raised edge 14, allowing a bottom surface of the notch 18 to be flush with the upper surface 20 of the plate body 12. It should also be understood that a bottom surface of the internal space defined by the raised edge 14 is on a same plane as the bottom surface of the notch 18 and a bottom surface of the external space outside the raised edge 14. During the injection molding of the upper plastic part, gas in the internal space defined by the raised edge 14 can be discharged to the external space outside the raised edge 14 through the notch 18 substantially without obstruction, allowing the injection molding gas to be discharged more smoothly.

In some embodiments, the raised edge 14 surrounds the through-hole 16 to be formed into a frame in a form of a rounded square. The notch 18 is defined through at least one corner of the rounded square. In this way, the anti-twisting performance can be improved.

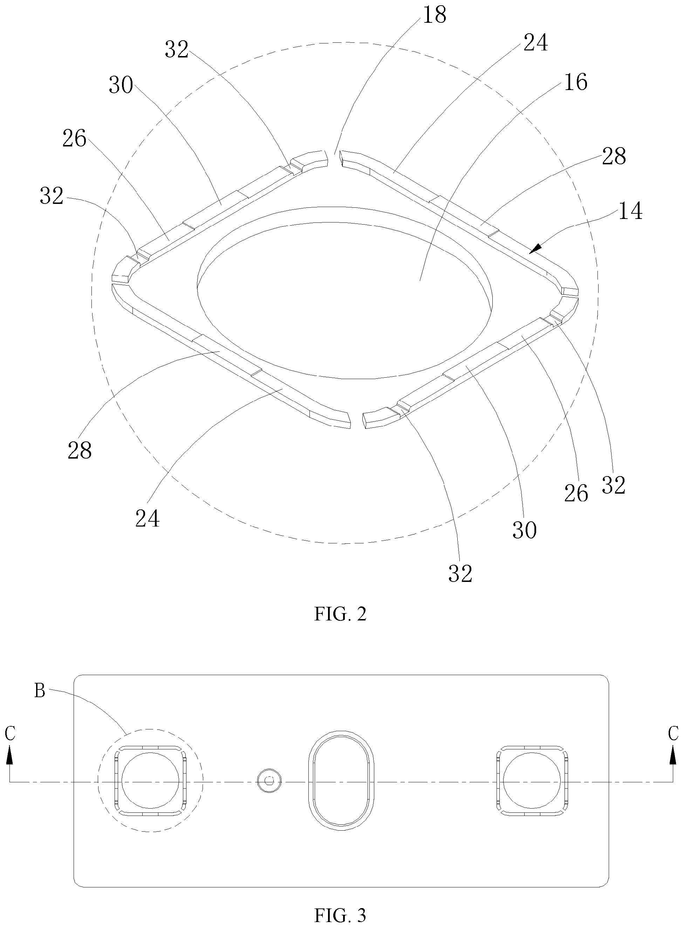

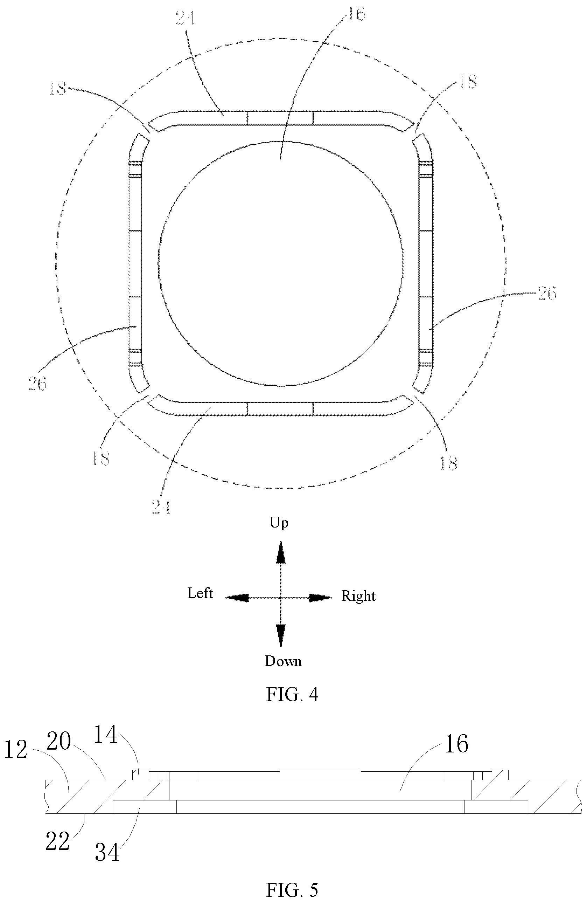

In an exemplary embodiment of the present disclosure, the rounded square frame includes two first side frames 24 opposite to each other and two second side frames 26 opposite to each other. As illustrated in FIG. 3 and FIG. 4, the two first frames 24 are an upper side frame and a lower side frame, respectively. The two second frames 26 are a left side frame and a right side frame, respectively. One notch 18 is formed at a connection of the two adjacent side frames. The notch 18 is located in the upper plastic part, which can realize the anti-twisting in an extension direction of the first side frame 24 and in an extension direction of the second side frame 26 to improve anti-twisting performances of the upper plastic part and the cover plate 100.

Further, in the illustrated embodiments, the rounded square frame has one notch 18 at each of four corners of the rounded square frame. When the gas is exhausted, the gas in the internal space defined by the raised edge 14 can be exhausted from the notches 18 of the four corners, increasing an exhaust speed of the gas. In addition, the rounded square frame is located at a corner position. The raised edge 14 has an arc-shaped inner wall, which can guide an air flow to the notch 18, reducing gas resistance and further increasing the exhaust speed.

In some embodiments, the raised edge 14 includes two first side frames 24 opposite to each other and two second side frames 26. At least one of the two first side frames 24 has a first protrusion 28 at a surface of the at least one of the two first side frames 24, and/or at least one of the two second side frames 26 has a second projection 30 at a surface of the at least one of the two second side frames 26.

In this way, the anti-twisting performance of the upper plastic part and the anti-twisting performance of the cover plate 100 can be realized.

In an exemplary embodiment of the present disclosure, during the injection molding of the upper plastic part, the upper plastic part has a recessed portion corresponding to the protrusion. Cooperation between the protrusion and the recessed portion can realize the anti-twisting performance of the upper plastic part and the anti-twisting performance of the cover plate 100.

In the illustrated embodiment, two first side frames 24 have the first protrusions 28 at surfaces of the two first side frames 24, and two second side frames 26 have the second protrusions 30 at surfaces of the two first side frames 26.

In one embodiment, one of the two first side frames 24 has a first protrusion 28 at a surface of the one of the two first side frames 24.

In one embodiment, the two first side frames 24 have first protrusions 28 at the surfaces of the two first side frames 28.

In one embodiment, one of the two second side frames 26 has a second protrusion 30 at a surface of the one of the two second side frames 26.

In one embodiment, the two second side frames 26 have the second protrusions 30 at the surfaces of the two first side frames 26.

One, two, or more than two protrusions may be provided on a surface of each side frame. In the illustrated embodiment, one protrusion is provided on the surface of each side frame.

In some embodiments, the raised edge 14 includes two first side frames 24 opposite to each other and two second side frames 26.

At least one of the two first side frames 24 has a first recess at a top surface of the at least one of the two first side frames 24, and/or at least one of the two second side frames 26 has a second recess 32 at a top surface of the at least one of the two second side frames 26.

In this way, the anti-twisting performance of the upper plastic part and the anti-twisting performance of the cover plate 100 can be realized.

In an exemplary embodiment of the present disclosure, during the injection molding of the upper plastic part, the upper plastic part has a protrusion corresponding to the recess. Cooperation between the protrusion and the recess can realize the anti-twisting performance of the upper plastic part and the anti-twisting performance of the cover plate 100.

In the illustrated embodiment, two second side frames 26 have the second recesses 32 at top surfaces of the two second side frames 26.

In one embodiment, one of the two first side frames 24 has a first recess at a top surface of the one of the two first side frames 24.

In one embodiment, the two first side frames 24 have first recesses at the top surfaces of the two first side frames 24.

In one embodiment, one of the two second side frames 26 has a second recess 32 at a top surface of the one of the two second side frames 26.

One, two, or more than two recesses may be provided on a surface of each side frame. In the illustrated embodiment, two recesses are provided on the surface of the one of the two second side frames 26.

In some embodiments, a depth of the first recess is smaller than or equal to a depth of the notch 18, and/or a depth of the second recess 32 is smaller than or equal to a depth of the notch 18.

In an exemplary embodiment of the present disclosure, in the illustrated embodiment, the depth of the second recess 32 is smaller than the depth of the notch 18, which can be interpreted as that the second frame 26 is not broken into a plurality of segments, which can ensure predetermined structural strength of the cover plate 100.

In one embodiment, the depth of the second recess 32 may be equal to the depth of the notch 18. In this case, a bottom surface of the second recess 32 is flush with the upper surface 20 of the plate body 12, which can also be interpreted as that the bottom surface of the internal space defined by the raised edge 14 is on a same plane as the bottom surface of the second recess 32 and the bottom surface of the external space outside the raised edge 14, increasing the exhaust speed.

In one embodiment, the depth of the first recess may be equal to the depth of the notch 18. In this case, a bottom surface of the first recess is flush with the upper surface 20 of the plate body 12, which can also be interpreted as that the bottom surface of the internal space defined by the raised edge 14 is on a same plane as the bottom surface of the first recess and the bottom surface of the external space outside the raised edge 14, increasing the exhaust speed.

In one embodiment, the depth of the first recess may be smaller than the depth of the notch 18, which can be interpreted as that the first frame 24 is not broken into a plurality of segments, which can ensure the predetermined structural strength of the cover plate 100.

In some embodiments, the raised edge 14 has a frame-shaped structure. The frame-shaped structure includes four side frames. At least one of the four side frames has a protrusion and two recesses. The protrusion is disposed between the two recesses. In this way, the anti-twisting performance can be improved.

In an exemplary embodiment of the present disclosure, in the illustrated embodiment, the frame-shaped structure is a rounded square frame. The four side frames include two first side frames 24 and two second side frames 26. In the two second side frames 26, each second side frame 26 has a second protrusion 30 and two second recesses 32. The second protrusion 30 is located between the two second recesses 32. Correspondingly, the upper plastic part has a recessed portion corresponding to the second protrusion 30, and a protrusion corresponding to the second recess 32. In this way, three anti-twisting structures that are in a male-female fit with one another are formed at the second side frame 26, which can improve the anti-twisting performance.

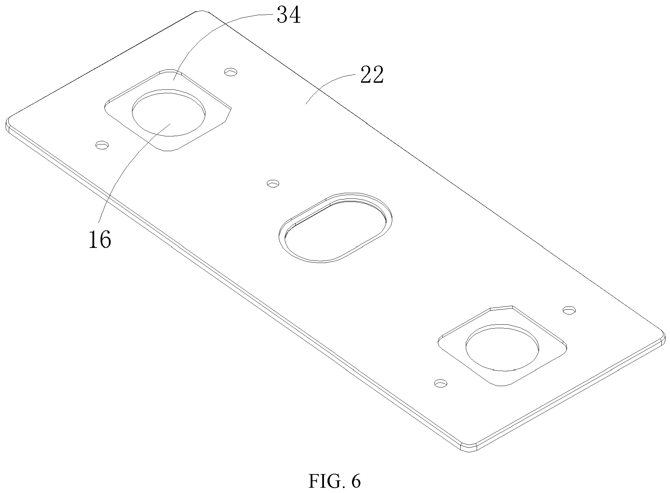

In some embodiments, as illustrated in FIG. 5 and FIG. 6, the plate body 12 has a first surface and a second surface. The raised edge 14 is disposed on the first surface. The second surface further has a recessed portion 34 surrounding the through-hole 16 and in communication with the through-hole 16. In this way, the anti-twisting performance of a lower plastic part and the anti-twisting performance of the cover plate 100 can be improved.

In an exemplary embodiment of the present disclosure, the first surface may be the upper surface 20 of the plate body 12. The second surface may be a lower surface 22 of the plate body 12. The cover plate 100 also combines with the lower plastic part. During the injection molding of the lower plastic part, the protrusion can be formed at a position corresponding to the recess 34. Cooperation between the protrusion and the recess 34 can enhance the anti-twisting performance between the lower plastic part and the cover plate 100.

In some embodiments, the cover plate 100 includes a concave-convex structure disposed on a surface of the raised edge 14 away from the plate body 12. In this way, the concave-convex structure can enhance the anti-twisting performance of the upper plastic part and the anti-twisting performance of the cover plate 100.

In an exemplary embodiment of the present disclosure, in one embodiment, the concave-convex structure may include one or any combination of the first protrusion 28, the second protrusion 30, the first recess, and the second recess 32 described above.

In one embodiment, the concave-convex structure may include other shapes of protrusions, ribs, raised edges, recessed portion, or the like.

When the upper plastic part is connected to the cover plate 100, a part where the upper plastic part is connected to the concave-convex structure forms another concave-convex structure complementary to the concave-convex structure, which increases a connection area between the upper plastic part and the cover plate 100, and enhances the anti-twisting performance of the upper plastic part and the anti-twisting performance of the cover plate 100.

A top cover is provided according to the embodiment of the present disclosure. The top cover includes: the cover plate 100 according to any one of the above embodiments.

In an exemplary embodiment of the present disclosure, in one embodiment, the top cover further includes the upper plastic part. The upper plastic part is disposed on the surface of the cover plate 100 and covers the raised edge 14. The upper plastic part is partially located in the notch 18. In the illustrated embodiment, the raised edge 14 is disposed on an upper surface 20 of the cover plate 100.

In some embodiments, the top cover 100 further includes: a pole; and an insulating member mounted in the through-hole 16. The insulating member is fixedly connected to a surface of the pole. A part of the insulating member is filled in the notch 18. In an exemplary embodiment of the present disclosure, the insulating member may be the upper plastic part, or other insulating members. The present disclosure is not limited in this regard. The pole may be made of a metallic material.

In addition, the top cover may also include other components, such as the lower plastic part, a sealing ring, a pressure relief valve.

A battery cell is provided according to the embodiment of the present disclosure. The battery cell includes: the top cover according to the above embodiments.

In an exemplary embodiment of the present disclosure, the battery cell may further include a shell having an opening at a side of the shell. The top cover may be mounted at the opening to form a relatively sealed shell. Components of the cell, electrolyte, or the like may be placed in the shell.

The battery cell may be the square cell, the circular cell, or the battery cell of other shapes. The present disclosure is not limited in this regard.

A battery module is provided according to the embodiment of the present disclosure. The battery module includes the battery cell according to the above embodiments.

In the top cover, the battery cell, and the battery module, the notch 18 is formed in the raised edge 14, in such a manner that on the one hand, during an injection molding process of an upper plastic part, the upper plastic part can be clamped to realize the anti-twisting.

On the other hand, in a process of injection molding of the upper plastic part into the cover plate 100, the notch 18 that has not been filled by the upper plastic part can be in communication with the ambient environment. In this way, the gas formed during the injection molding of the upper plastic part can be discharged from the notch 18. That is, the arrangement of the notch 18 is also conducive to discharging of the gas during the injection molding of the upper plastic part, preventing formation of bubbles during the injection molding of the upper plastic part to affect physical properties of the upper plastic part, and can also prevent the formation of the gap between the upper plastic part and the cover plate 12 during demolding of the upper plastic part, affecting an anti-twisting ability.

In an exemplary embodiment of the present disclosure, the battery module may include one battery cell or a plurality of battery cells. The plurality of battery cells may be electrically connected to one another in series, parallel, or series-parallel. A plurality of battery modules can form a power battery pack. The plurality of battery modules can also be assembled on a battery cluster. The battery cluster can be placed in a container to form a container-type energy storage device. The plurality of battery modules may also be placed on an energy storage cabinet to form an energy storage device in the form of a household energy storage cabinet.

In the present disclosure, the description with reference to the terms "one embodiment", "some embodiments", "an illustrative embodiment", "an example", "a specific example", or "some examples", etc., means that specific features, structures, materials, or characteristics described in conjunction with the embodiment(s) or example(s) are included in at least one embodiment or example of the present disclosure. In the present disclosure, any illustrative reference of the above terms does not necessarily refer to the same embodiment(s) or example(s). Moreover, the specific features, structures, materials, or characteristics as described can be combined in any one or more embodiments or examples as appropriate.

Although embodiments of the present disclosure have been illustrated and described, it is conceivable for those skilled in the art that various changes, combinations, modifications, replacements, and variations can be made to these embodiments without departing from the principles and spirit of the present disclosure. The scope of the present disclosure shall be defined by the claims as appended and their equivalents.

## Claims

1. A cover plate for a battery cell, the cover plate comprising:
a plate body having a through-hole; and
a raised edge disposed on a surface of the plate body and surrounding the through-hole, the raised edge having at least one notch, and an internal space defined by the raised edge being in communication with an external space outside the raised edge through the at least one notch.

2. The cover plate according to claim 1, wherein the at least one notch has a depth equal to a height of the raised edge.

3. The cover plate according to claim 1 or 2, wherein the raised edge surrounds the through-hole to be formed into a frame in a form of a rounded square, and the at least one notch is defined through at least one corner of the rounded square.

4. The cover plate according to any one of claims 1 to 3, wherein the raised edge comprises two first side frames opposite to each other and two second side frames opposite to each other, wherein:
at least one of the two first side frames has a first protrusion provided at a surface of the at least one of the two first side frames; and/or
at least one of the two second side frames has a second projection provided at a surface of the at least one of the two second side frames.

5. The cover plate according to any one of claims 1 to 3, wherein the raised edge comprises two first side frames opposite to each other and two second side frames opposite to each other, wherein:
at least one of the two first side frames has a first recess formed at a top surface of the at least one of the two first side frames; and/or
at least one of the two second side frames has a second recess formed at a top surface of the at least one of the two second side frames.

6. The cover plate according to claim 5, wherein:
a depth of the first recess is smaller than or equal to a depth of each of the at least one notch; and/or
a depth of the second recess is smaller than or equal to a depth of each of the at least one notch.

7. The cover plate according to any one of claims 1 to 3, wherein the raised edge has a frame-shaped structure, the frame-shaped structure comprising four side frames, at least one of the four side frames having a protrusion and two recesses, and the protrusion being disposed between the two recesses.

8. The cover plate according to any one of claims 1 to 7, wherein the plate body has a first surface and a second surface, wherein:
the raised edge is disposed on the first surface; and
the second surface further has a recessed portion surrounding the through-hole and in communication with the through-hole.

9. The cover plate according to any one of claims 1 to 8, wherein the cover plate comprises a concave-convex structure disposed on a surface of the raised edge away from the plate body.

10. A top cover, comprising: the cover plate according to any one of claims 1 to 9.

11. The top cover according to claim 10, further comprising:
a pole; and
an insulating member mounted in the through-hole, the insulating member being fixedly connected to a surface of the pole, and a part of the insulating member being filled in the at least one notch.

12. A battery cell, comprising:
the top cover according to claim 10 or 11.

13. A battery module, comprising:
the battery cell according to claim 12.
